(19) **Europäisches Patentamt / European Patent Office / Office européen des brevets**

(11) **EP 3 324 336 B1**

(12) # EUROPEAN PATENT SPECIFICATION

(45) Date of publication and mention of the grant of the patent:
**26.06.2024 Bulletin 2024/26**

(21) Application number: **17201981.2**

(22) Date of filing: **16.11.2017**

(51) International Patent Classification (IPC):
**G06V 10/26** *(2022.01)* **G06V 20/58** *(2022.01)*

(52) Cooperative Patent Classification (CPC):
**G06V 20/58; G06V 10/267**

(54) **INFORMATION PROCESSING DEVICE, INFORMATION PROCESSING METHOD, AND CARRIER MEANS**

INFORMATIONSVERARBEITUNGSVORRICHTUNG, INFORMATIONSVERARBEITUNGSVERFAHREN UND TRÄGERMITTEL

DISPOSITIF ET PROCÉDÉ DE TRAITEMENT D'INFORMATIONS ET MOYENS DE SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2016 JP 2016224921**
**14.09.2017 JP 2017176859**

(43) Date of publication of application:
**23.05.2018 Bulletin 2018/21**

(73) Proprietor: **Ricoh Company, Ltd.**
**Tokyo 143-8555 (JP)**

(72) Inventors:
• **TAKAHASHI, SADAO**
**Tokyo, 143-8555 (JP)**
• **OKADA, DAISUKE**
**Tokyo, 143-8555 (JP)**
• **KIMURA, SUKEHIRO**
**Tokyo, 143-8555 (JP)**
• **SUZUKI, TABITO**
**Tokyo, 143-8555 (JP)**
• **OHBAYASHI, YOHICHIROH**
**Tokyo, 143-8555 (JP)**
• **KUBOZONO, HIROKI**
**Tokyo, 143-8555 (JP)**
• **YOSHIDA, JUN**
**Tokyo, 143-8555 (JP)**
• **AMANO, SEIYA**
**Tokyo, 143-8555 (JP)**

(74) Representative: **SSM Sandmair Patentanwälte Rechtsanwalt Partnerschaft mbB Joseph-Wild-Straße 20 81829 München (DE)**

(56) References cited:
**US-A1- 2013 182 114**

• **WANG BIHAO ET AL: "Multiple obstacle detection and tracking using stereo vision: Application and analysis", 2014 13TH INTERNATIONAL CONFERENCE ON CONTROL AUTOMATION ROBOTICS & VISION (ICARCV), IEEE, 10 December 2014 (2014-12-10), pages 1074-1079, XP032749347, DOI: 10.1109/ICARCV.2014.7064455 [retrieved on 2015-03-19]**
• **OTSU N: "A THRESHOLD SELECTION METHOD FROM GRAY-LEVEL HISTOGRAMS", IEEE TRANSACTIONS ON SYSTEMS, MAN AND CYBERNETICS, IEEE INC. NEW YORK, US, vol. 9, no. 1, 1 January 1979 (1979-01-01), pages 62-66, XP000617438, ISSN: 0018-9472**
• **ONIGA FLORIN ET AL: "Fast obstacle detection using U-disparity maps with stereo vision", 2015 IEEE INTERNATIONAL CONFERENCE ON INTELLIGENT COMPUTER COMMUNICATION AND PROCESSING (ICCP), IEEE, 3 September 2015 (2015-09-03), pages 203-207, XP032803401, DOI: 10.1109/ICCP.2015.7312630 [retrieved on 2015-10-29]**

EP 3 324 336 B1

- WU B-F: "A Discriminant Analysis Based Recursive Automatic Thresholding Approach for Image Segmentation", IEICE TRANSACTIONS ON INFORMATION AND SYSTEMS, INFORMATION & SYSTEMS SOCIETY, TOKYO, JP , vol. E88-D, no. 7 1 July 2005 (2005-07-01), pages 1716-1723, XP009502037, ISSN: 0916-8532, DOI: 10.1093/IETISY/E88-D.7.1716 Retrieved from the Internet: URL:http://search.ieice.org/bin/summary.ph p?id=e88-d_7_1716&category=D&year=2005&la n g=E&abst= [retrieved on 2017-11-30]
- CHI LI ET AL: "Robust Object Tracking in Crowd Dynamic Scenes Using Explicit Stereo Depth", 5 November 2012 (2012-11-05), COMPUTER VISION ACCV 2012, SPRINGER BERLIN HEIDELBERG, BERLIN, HEIDELBERG, PAGE(S) 71 - 85, XP047027110, ISBN: 978-3-642-37430-2 * the whole document *

**Description**

BACKGROUND

Technical Field

The present disclosure relates to an information processing device, an information processing method, and a carrier means.

Background Art

Currently, the body structure or the like of cars have been developed with a view to improving the security of cars, for example, by protecting pedestrians or passengers when there is a collision with the pedestrians or other cars.
In recent years, technologies to detect, for example, a person or a car at high speed have been developed due to the development of information processing technologies and image processing technologies. With the application of such technologies, cars with a collision avoidance system (CAS) that prevent a collision by automatically applying brakes beforehand are also known. Such a collision avoidance system measures the distance to an object to be detected such as a person or another car, using, for example, a millimeter-wave radar device, a light detection and ranging (LiDAR) device, or a stereo camera, and controls the braking of the vehicle based on the result of measurement of distance. Due to this configuration, automatic braking can be achieved according to the distance to the object to be detected.
JP-2014-096005-A discloses an object detector that detects objects upon precisely grouping the objects that are determined to be the same. Such an object detector groups valid ranges using a distance image, and then focuses on the contour (edge) of an image of grouped object with levels of gradation and divides the ranges accordingly.
WO 2012/017650 A1 discloses an object detection device that can precisely detect an object and a road surface. Such an object detection device detects a road-surface area, and then detects data having height equal to or greater than the road surface as a candidate for object area and determines the object and road surface based on the characteristics in shape.
Multiple obstacle detection and tracking using stereo vision: Application and analysis, Wang Bihao et al, 2014, discloses the use of U-disparity maps to detect objects.
However, as the distance to an object to be detected gets longer, the range resolution in measuring the distance to the objects to be detected (the accuracy of distance measurement) deteriorates. For this reason, there are some inconvenient cases in which a plurality of objects to be detected that are at a long distance are combined and detected as one object.

SUMMARY

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.
According to the present disclosure, objects to be detected can accurately be separated and detected.

BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a diagram illustrating the position of a stereo camera mounted on a vehicle, which is a part of an equipment control system, according to a first embodiment of the present disclosure.
FIG. 2 is a diagram illustrating a configuration of a stereo camera and its peripheral equipment provided for a vehicle, according to an embodiment of the present disclosure.
FIG. 3 is a diagram illustrating a configuration of an imaging device provided with a stereo camera, according to an embodiment of the present disclosure.
FIG. 4 is a diagram illustrating functional blocks implemented by a CPU of an equipment control system based on a vehicle control program, according to a first embodiment of the present disclosure.
FIG. 5 is a diagram illustrating a U-map according to an embodiment of the present disclosure.
FIG. 6 is a diagram illustrating a state in which one isolated area is set to two objects on a U-map, according to an embodiment of the present disclosure.

FIG. 7 is a diagram illustrating an object to be detected that are divided into two at a to-be-separated position that is specified based on amounts of characteristics, according to an embodiment of the present disclosure.

FIG. 8 is a flowchart of separating processes, according to an embodiment of the present disclosure.

FIG. 9 is a diagram illustrating how one-dimensional histogram is generated, according to an embodiment of the present disclosure.

FIG. 10 is a diagram illustrating the calculation of a degree of class separation, according to an embodiment of the present disclosure.

FIG. 11 is a diagram illustrating a state in which an isolated area is accurately set to each of two objects on a U-map, according to an embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific-integrated-circuits (ASICs), field programmable gate arrays (FPGAs), computers or the like. These terms in general may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Some embodiments of an equipment control system will be described below with reference to the drawings.

<System Configuration>

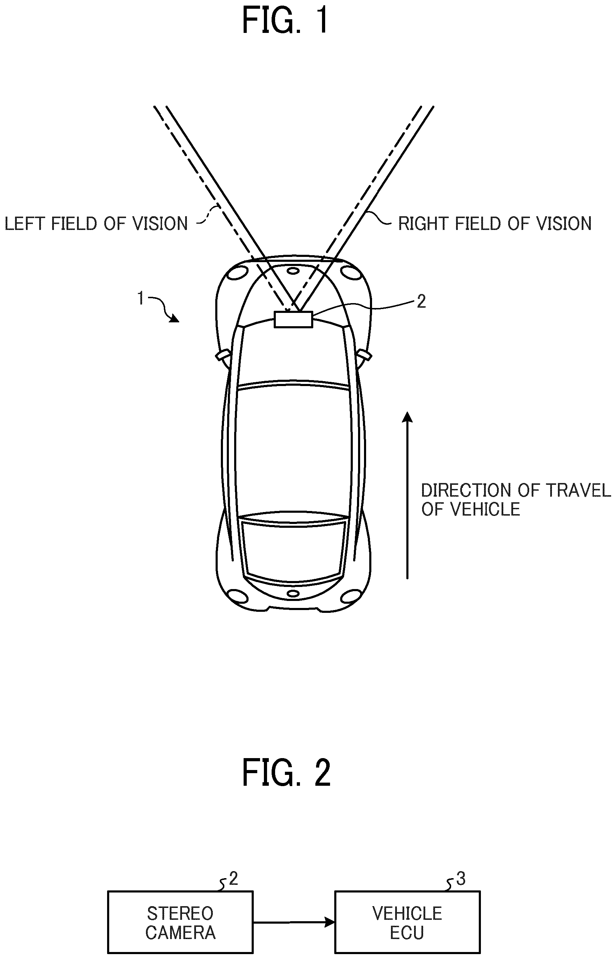

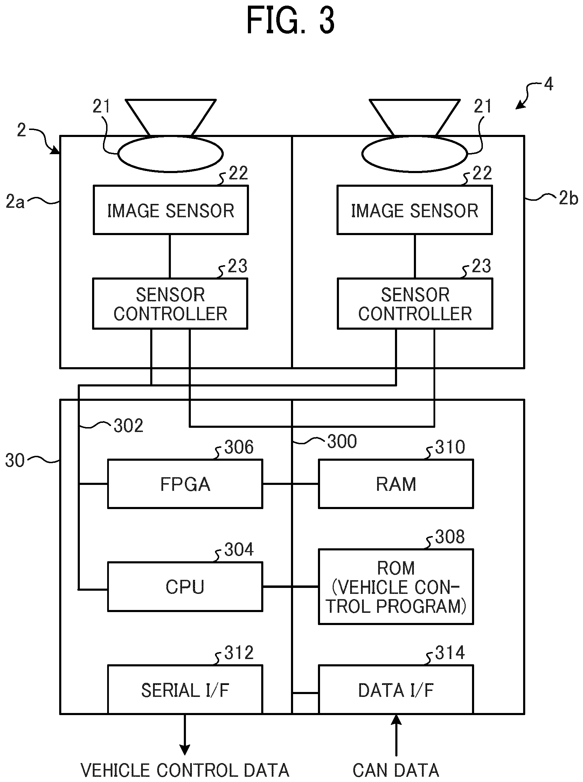

First, the equipment control system according to the first embodiment is mounted, for example, on the front windshield of a vehicle 1, as illustrated in FIG. 1, and is provided with a stereo camera 2 that captures an image of a predetermined area ahead of the vehicle 1 in the directions of travel. As will be described later with reference to FIG. 3, the stereo camera 2 is an imager provided with two image sensors 22, and captures two images of a right field of vision and a left field of vision.

FIG. 2 is a diagram illustrating a configuration of the stereo camera 2 and its peripheral provided for the vehicle 1 that is an example of a mobile object, according to the present embodiment. For example, the stereo camera 2 sends the captured two images to a vehicle engine control unit (ECU) 3. The vehicle ECU 3 is provided for the vehicle 1, and performs various kinds of control on the vehicle 1 such as engine-control, brake control, lane keep assist, and steering assist on the vehicle 1. The case of a vehicle is described as an example of a mobile object in the following description. However, the equipment control system according to the present embodiment may be applied, for example, to a ship, aircraft, and a robot.

FIG. 3 is a diagram illustrating a configuration of an imaging device 4 provided with the stereo camera 2, according to the present embodiment. The imaging device 4 includes, for example, the stereo camera 2 and an image processing device 30. The stereo camera 2 includes a camera unit 2a for a left eye and a camera unit 2b for a right eye, and these two camera units are assembled horizontally in parallel and capture moving images (or still images) in an area to be captured.

Each of the camera unit 2a and the camera unit 2b includes a lens 21, an image sensor 22, and a sensor controller 23. The image sensor 22 is, for example, a charge coupled device (CCD) image sensor or a complementary metal oxide semiconductor (CMOS) image sensor. The sensor controller 23 controls, for example, the exposure of the image sensor 22, the reading of an image, the communication with an external circuit, and the sending of the image data.

For example, the image processing device 30 may be installed inside the vehicle ECU 3 illustrated in FIG. 2. The image processing device 30 includes, for example, a data bus line 300, a serial bus line 302, a central processing unit (CPU) 304, a field programmable gate array (FPGA) 306, a read-only memory (ROM) 308, a random access memory (RAM) 310, a serial interface (I/F) 312, and a data interface (I/F) 314.

The stereo camera 2 as described above is connected to the image processing device 30 through the data bus line 300 and the serial bus line 302. The CPU 304 controls the entire operation of the image processing device 30, and performs image processing and image recognition processes. The brightness image data of the images that are captured by the image sensors 22 of the camera unit 2a and the camera unit 2b are written into the RAM 310 of the image processing device 30 through the data bus line 300. The control data for changing the exposure value of a sensor from the CPU 304 or the FPGA 306, the control data for changing the image reading parameter, various kinds of setting data, or the like are transmitted and received through the serial bus line 302.

The FPGA 306 performs processing that needs to be done in real time on the image data stored in the RAM 310, such as gamma correction, distortion correction (collimation of images on the right and left), disparity computation using block matching, to generate a disparity image, and writes the generated disparity image into the RAM 310 again. Note that the position of an object in the up-and-down directions, the position of the object in the right and left directions, and the position of the object in the depth direction are associated with each other on the disparity image.

The CPU 304 controls each one of the sensor controllers 23 of the stereo camera 2, and controls the entirety of the image processing device 30. The CPU 304 obtains the controller area network (CAN) data of the vehicle through the data interface 314 as parameters (e.g., vehicle speed, acceleration, a rudder angle, and a yaw rate).

The vehicle ECU 3 is supplied with vehicle control data, which is the recognition data of an object such as a preceding vehicle, a person, a guardrail, and a road surface, through the serial interface 312, and the vehicle control data is used, for example, by an automatic braking system and a drive assistance system provided as a control function of the vehicle ECU 3. The automatic braking system controls the braking of the vehicle 1. The drive assistance system performs various kinds of control on the vehicle 1 such as a lane keep assist and steering assist.

<Functions of Image Processing Device>

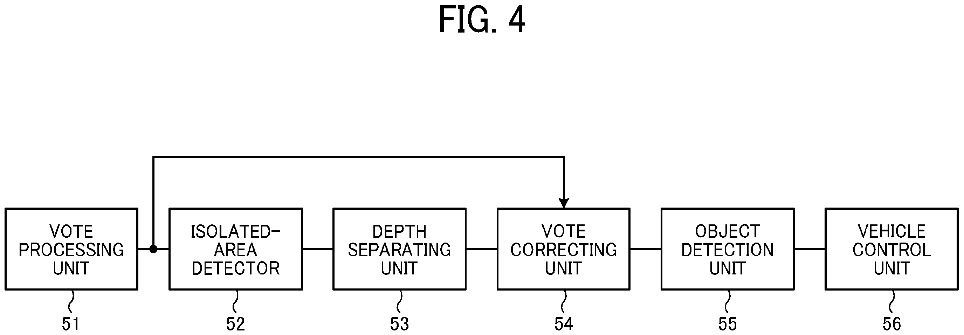

The CPU 304 of the image processing device 30 executes a vehicle control program stored in a storage unit such as the ROM 308 to implement the multiple functions depicted in FIG. 4, and detects an object such as a preceding vehicle, a person, a guardrail, and a road surface based on the disparity image captured by the imaging device 4. Then, the CPU 304 of the image processing device 30 supplies the vehicle ECU 3 with the vehicle control data according to the detected object. The vehicle ECU 3 performs various kinds of control on the vehicle 1 such as a brake control, lane keep assist, and a steering assist, using the vehicle control data.

In other words, the CPU 304 executes a vehicle control program stored in a storage unit such as the ROM 308 to implement the multiple functions depicted in FIG. 4, including a vote processing unit 51, an isolated-area detector 52, a depth separating unit 53, a vote correcting unit 54, an object detection unit 55, and a vehicle control unit 56.

In the present embodiment, the vote processing unit 51, the isolated-area detector 52, the depth separating unit 53, the vote correcting unit 54, the object detection unit 55, and the vehicle control unit 56 are implemented by software. However, some of or all of the vote processing unit 51, the isolated-area detector 52, the depth separating unit 53, the vote correcting unit 54, the object detection unit 55, and the vehicle control unit 56 may be implemented by hardware such as an integrated circuit (IC).

The vehicle control program may be installed for distribution in any desired computer-readable recording medium such as a compact disc, a read-only memory (CD-ROM), a flexible disk (FD), in a file format installable or executable by a computer. Moreover, the vehicle control program may be installed for distribution in any desired computer-readable recording medium such as a compact disc-recordable (CD-R), a digital versatile disk (DVD), a Blu-ray disc (registered trademark), and a semiconductor memory. Alternatively, the vehicle control program may be provided and installed through a network such as the Internet. Moreover, the vehicle control program may be integrated in advance, for example, into the ROM inside the device for distribution.

The vote processing unit 51 that serves as a generator generates, based on the disparity image generated from the image captured by the imaging device 4, a U-map (an example of two-dimensional distribution data), which is a two-dimensional histogram indicating the frequency distribution, in which the position of an object in the horizontal directions and the position of the object in the depth direction are associated with each other. For purposes of simplification of explanation, the term "map" is used in the present disclosure. However, a map or image-like data is not formed in actuality. It is to be understood that data group is generated in which the position of an object in the horizontal directions and the position of the object in the depth directions are associated with each other.

More specifically, the vote processing unit 51 generates a U-map (image of bird's-eye view, map of bird's-eye view), which is a two-dimensional histogram indicating the frequency distribution of disparity values, in which the horizontal axis indicates the actual distance to an object and the vertical axis indicates a reduced disparity where the degree of reduction varies according to the distance to an object. For example, when the object is at a long distance equal to or greater than 50 meters (m), the vote processing unit 51 does not reduce the disparity. However, when the object is at a middle distance equal to or greater than 20 m but less than 50 m, reduces the disparity by half. Moreover, when the object is at a short distance equal to or greater than 10 m but less than 20 m, the vote processing unit 51 reduces the disparity by one-third. When the object is at a distance less than 10 m, the disparity is reduced by one-eighth. When the object is at a long distance, the object appears small, only a little disparity information is available, and the resolution of the distance is small. Accordingly, the disparity is not reduced. By contrast, when the object is at a short distance, the object appears large. Accordingly, a lot of disparity information is available, and the resolution of the distance increases. Thus, the disparity is reduced in a greater amount. In the present embodiment, a map of bird's-eye view (image of bird's-eye view) is generated in order to make it easier to detect an object. For this reason, it is satisfactory as long as the horizontal axis indicates an equivalent of the actual distance.

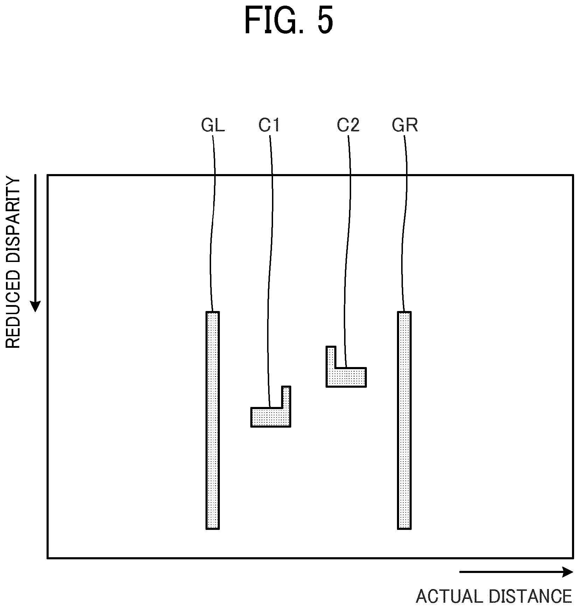

FIG. 5 is a U-map generated using a reduced disparity that is determined as above based on the distance to an object, according to the present embodiment. In the example illustrated in FIG. 5, there are two traffic lanes on the road placed between two guardrails GR and GL on the right and left sides, and vehicles C1 and C2 are traveling on the respective traffic lanes approximately in parallel with each other. In the present embodiment, the vote processing unit 51 generates a U-map where the vertical axis indicates the disparity value and the horizontal axis indicates the actual distance. However, a U-map where the vertical axis indicates the disparity value and the horizontal axis indicates the X-coordinate value may be generated, and the processes as will be described later in detail may be executed using such a U-map. Even in this case, a similar effect can be achieved compared with cases in which a U-map where the vertical axis indicates the disparity value and the horizontal axis indicates the actual distance is used. In other words, regardless of the conversion between the vertical axis and the horizontal axis, it is satisfactory as long as data group is available in which the position of an object in the horizontal directions and the position of the object in the depth directions are associated with each other. In the following description, the disparity value of the depth direction is converted into a distance value. However, the data of the disparity value may be used just as it is without conversion as above.

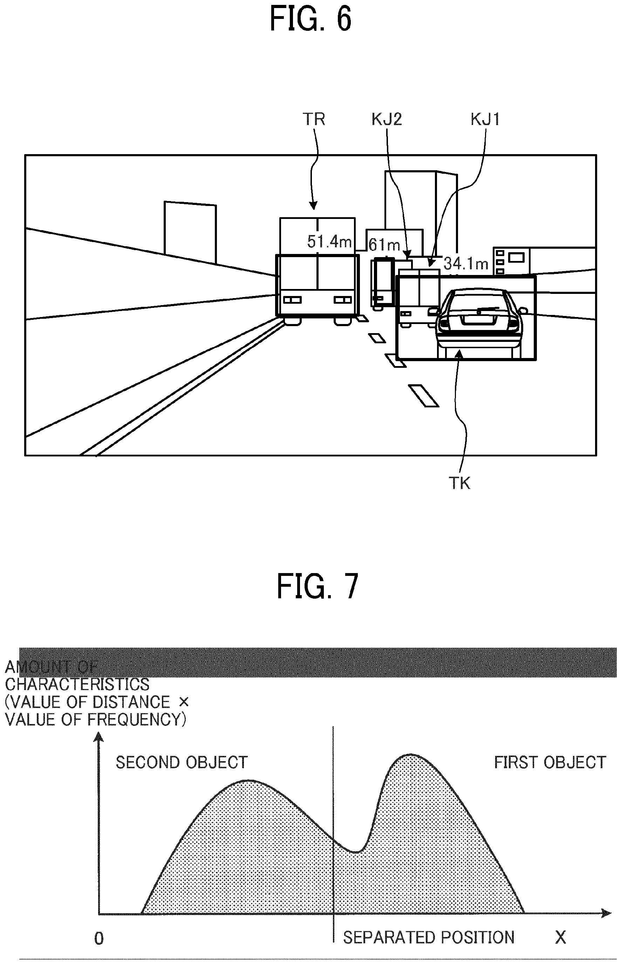

The isolated-area detector 52 illustrated in FIG. 4 that serves as a detector detects isolated areas that correspond to the isolated objects existing on a U-map. FIG. 6 is a diagram illustrating an example in which isolated areas are detected, according to the present embodiment. In the example case illustrated in FIG. 6, the vehicle 1 that is provided with the equipment control system according to the present embodiment is traveling forward in the lane on the left of the linear road with two traffic lanes, and a truck TR is traveling forward ahead of the vehicle 1 as a preceding vehicle. In the lane on the right, a taxi TK, a light truck KJ1, and a light truck KJ2, which are in the order listed from a front side, are traveling forward. Among the vehicles that are traveling forward in the lane on the right, the taxi TK that is traveling forward at a position closest to the vehicle 1 is recognizable approximately in its entirety. A right edge portion of the hood of the taxi TK overlaps with the rear light on the right of the light truck KJ1 that is traveling forward at a position ahead of the taxi TK. However, the entirety of the bed of the light truck KJ1 is approximately recognizable. On the other hand, approximately the left half of the light truck KJ2 is hidden by the light truck KJ1 that is traveling forward on a rear side of the light truck KJ2, and only the right half of the light truck KJ2 is recognizable. Note also that any known labeling processes (processes of giving ID to neighboring pixels) may be used to detect an isolated area, and an area to which the same ID is given, in sizes equal to or larger than the certain size, is extracted. However, no limitation is intended thereby, and any known various kinds of methods are applicable.

<Separating Processes>

Here, as objects having a similar distance value (disparity value) with each other are overlapping, it is assumed that the taxi TK and the light truck KJ1 are detected by error as a single vehicle by the isolated-area detector 52. A frame (detection frame) that encompasses the taxi TK and the light truck KJ1, as illustrated in FIG. 6, indicates the occurrence of such an erroneous detection. Note that the term "frame" used herein indicates the position and size of an object, and indicates, for example, information in which the coordinates of the corners of a rectangle that surrounds an object are associated with the height and width of the rectangle.

When the isolated areas that are detected by the isolated-area detector 52 are at positions in range where objects such as a pair of vehicles neighboring in the forward/backward directions tend to be combined (when the condition of the initiation of depth separation is met) due to the distance dispersion (disparity dispersion), the depth separating unit 53 that serves as a to-be-separated position specification unit performs depth separating processes. In other words, when objects are at a long distance, distance dispersion (disparity dispersion) tends to become large and the objects tend to be combined, and thus depth separating processes are performed. In particular, for example, "the shortest distance to the isolated area is equal to or longer than 30 m" is defined as the condition of the initiation of depth separation. The numerical value such as "30 m" may vary according to, for example, the stereo camera capabilities of the imaging device 4. In the present embodiment, the depth separating processes, as will be described later in detail, are not performed on an isolated area at a short distance. Due to this configuration, the processing load on the CPU 304 can be reduced.

The depth separating unit 53 an isolated area where the condition of the initiation of depth separation as described above is met, calculates one-dimensional characteristics (the product of a frequency and a distance value) which indicate the properties equivalent to the X-coordinate of an image (the coordinate on a U-map in the horizontal direction). In other words, the product of a frequency and a distance value is calculated for each X-coordinate (or each position in the horizontal direction). The depth separating unit 53 separates the calculated characteristics at all the X-coordinates (candidates for to-be-separated position (separated position)), and calculates an evaluation value (characteristics) that separates the objects at isolated areas. Accordingly, the to-be-separated position where the evaluation value becomes maximum is specified. In the present embodiment, the to-be-separated position where the evaluation value becomes maximum is specified as above. However, the to-be-separated position may be specified in a different manner according to, for example, the to-be-separated position where the evaluation value becomes the second largest or the design.

The product of a frequency and a distance value as described above indicates characteristics that correspond to the separation metrics (i.e., the ratio of a between-class variance to a within-class variance) in the discriminant analysis known in the art. Accordingly, when the to-be-separated position is specified based on such characteristics, as illustrated in FIG. 7, objects can appropriately be separated into two groups. In other words, the objects to be detected can precisely be separated.

When the difference in mean distance between the objects that are divided into two at the specified to-be-separated position is greater than the length of one vehicle, the depth separating unit 53 divides the isolated area into two isolated areas each of which contains one object. In the present embodiment, an isolated area that is at a position in the depth direction is separated according to statistical processing performed on the to-be-separated position and the difference in mean distance, rather than according to the degree of accuracy in width. Due to this configuration, separation becomes insusceptible to an adverse effect due to the distance dispersion (disparity dispersion) and an adverse effect due to the two-dimensional distribution on a U-map insusceptible, and for example, two vehicles that are traveling forward in the forward/backward directions can precisely be separated from each other and detected.

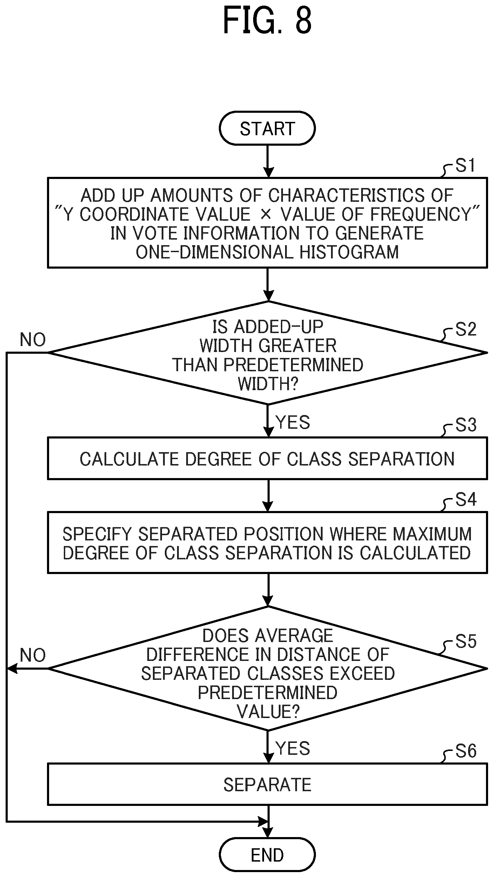

FIG. 8 is a flowchart of depth separating processes, according to the present embodiment. In a step S 1, the depth separating unit 53 calculates the amount of characteristics "Distance Value (Y-coordinate Value, Depth) × Frequency Value" for every pixel (vote information) that constitutes an isolated area where the condition of the initiation of depth separation as described above is met. Then, the depth separating unit 53 adds up the amounts of characteristics, which are calculated from each pixel as above, for each one of the columns on an isolated area in the depth direction, to generate a one-dimensional histogram. Such a one-dimensional histogram generated as above involves a dimensionality equivalent to the dimensionality of the X-axis of a disparity image. In the present embodiment, the product of a frequency and a distance value is calculated for each one of the multiple X-coordinates of a disparity image (the position in the right and left directions). However, no limitation is intended thereby, and the product of a frequency and a distance value may be calculated for each one of the multiple X-coordinates of a disparity image on a reduced scale.

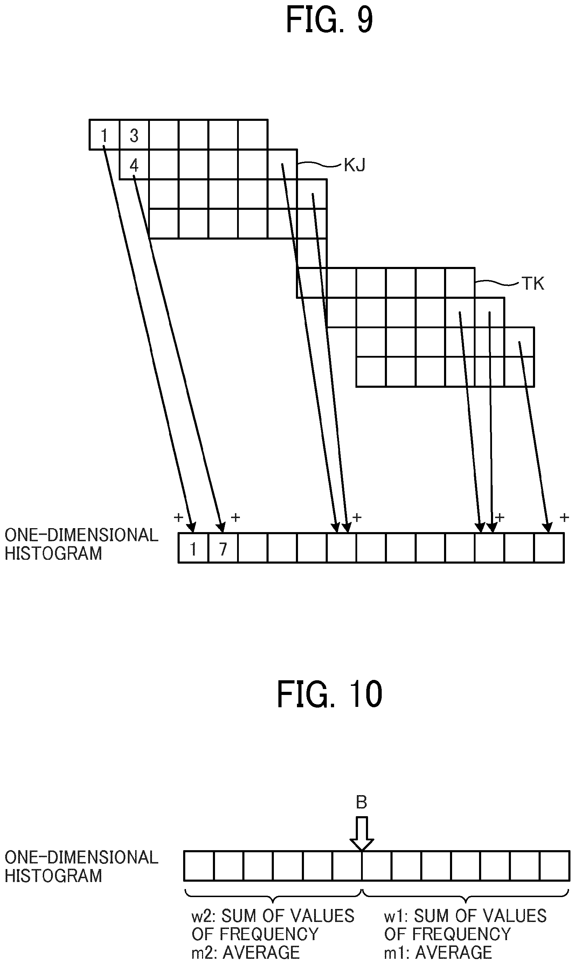

FIG. 9 is a diagram illustrating how a one-dimensional histogram is generated, according to the present embodiment. FIG. 9 illustrates an example in which the taxi TK and the light truck KJ1 that is traveling forward at a position ahead of the taxi TK, as illustrated in FIG. 6, are combined and detected as one isolated area. In FIG. 9, the lump on the recess side indicates the light truck KJ1, and the lump on the near side indicates the taxi TK. The values that are indicated in some pixels within the area of the light truck KJ1 are examples of the amounts of characteristics calculated in the arithmetic expression "Distance Value (Y-coordinate Value) × Frequency Value."

More specifically, in the example case illustrated in FIG. 9, the number of pixels in the first column of the area of the light truck KJ1 is only one, and the amount of characteristics calculated in the expression "Distance Value (Y-coordinate Value) × Frequency Value" is "1". The number of pixels in the second column of the area of the light truck KJ1 is two, and the amounts of characteristics calculated in the expression "Distance Value (Y-coordinate Value) × Frequency Value" are "3" and "4", respectively. The depth separating unit 53 integrates those amounts of characteristics in the column direction (note that the sign "+" in FIG. 9 indicates integration). Accordingly, a one-dimensional histogram where the first pixel and the second pixel indicate "1" and "7 (=3+4)", respectively, is generated. Due to the use of such a one-dimensional histogram generated as above, the length of time required for performing separating processes, as will be described later in detail, can be shortened. Moreover, as the coordinate axes of an image are used, objects can accurately be separated.

Note also that in the example case illustrated in FIG. 9, one pixel of the light truck KJ1 or the taxi TK does not always correspond to one pixel of the one-dimensional histogram. As illustrated in FIG. 9, a plurality of pixels of the light truck KJ1 or the taxi TK may correspond to one pixel of the one-dimensional histogram.

In a step S2, the depth separating unit 53 determines whether the width of the one-dimensional histogram generated in the step S1 is greater than a predetermined width. More specifically, the depth separating unit 53 determines whether the width of a one-dimensional histogram is wider than, for example, "2 m" which is the width of one standard vehicle. Note also that the width of the one-dimensional histogram may be converted into the width in reality, according to the distance values obtained from the detection frame of an isolated area.

When the width of a one-dimensional histogram is smaller than the width of one standard vehicle, the corresponding isolated area is not an isolated area where a plurality of objects are combined. Accordingly, when it is determined that the width of a one-dimensional histogram is smaller than the width of one standard vehicle, the depth separating unit 53 terminates the separating processes on that isolated area, and terminates the processes in the flowchart of FIG. 8. By contrast, when the width of a one-dimensional histogram is greater than the width of one standard vehicle, it is highly likely that the corresponding isolated area is an isolated area where a plurality of objects are combined. Accordingly, the depth separating unit 53 advances the process to a step S3.

In the step S3, the depth separating unit 53 separates the one-dimensional histogram in range where a frequency is present into two groups in order of X-coordinate, and calculates the evaluation values for the degree of class separation at each one of the to-be-separated positions. FIG. 10 is a schematic diagram illustrating how the degree of class separation is calculated, according to the present embodiment. As illustrated in FIG. 10, the depth separating unit 53 separates the one-dimensional histogram in range where a frequency is present into two groups in order of X-coordinate. The arrow B illustrated in FIG. 10 indicates the to-be-separated position of the one-dimensional histogram, and also indicates that the one-dimensional histogram is currently separated into two approximately in the center. For example, the depth separating unit 53 sequentially shifts the to-be-separated position of the one-dimensional histogram from the left end to the right end, and calculates the evaluation values for the degree of class separation at each one of the to-be-separated positions.

The to-be-separated position of the one-dimensional histogram may be shifted in any desired manner. For example, the to-be-separated position of the one-dimensional histogram may sequentially be shifted from the left end to the right end. Alternatively, the one-dimensional histogram may firstly be separated in the center, and computation may be performed while sequentially shifting the to-be-separated position of the one-dimensional histogram from the center to the right end. After the computation is terminated at the right end, the to-be-separated position of the one-dimensional histogram may be returned to the center, and computation may be performed while sequentially shifting the to-be-separated position of the one-dimensional histogram from the center to the left end.

As illustrated in FIG. 10, the depth separating unit 53 calculates the degree of class separation by performing the computation as in Formula 1 given below. In Formula 1, "w1" denotes the sum total of the frequency values in between the to-be-separated position and the left end of the one-dimensional histogram, and "m1" denotes the average of the amount of characteristics in between the to-be-separated position and the left end of the one-dimensional histogram (Distance Value × Frequency Value). Moreover, in Formula 1, "w2" denotes the sum total of the frequency values in between the to-be-separated position and the right end of the one-dimensional histogram, and "m2" denotes the average of the amount of characteristics in between the to-be-separated position and the right end of the one-dimensional histogram (Distance Value × Frequency Value). Note that the average m 1 and the average m2 correspond to the dimensionality of the distance value (Y-coordinate Value) on a U-map. The average m1 indicates the average value of the amount of characteristics in between the to-be-separated position and the left end of the one-dimensional histogram, and the average m2 indicates the average value of the amount of characteristics in between the to-be-separated position and the right end of the one-dimensional histogram.

$$\text{Degree of Class Separation} = w1 \times w2 \times (m1\text{-}m2)^2 \ ... \ \text{Formula 1}$$

The depth separating unit 53 calculates the average m1 and the average m2 by performing the computation as in Formula 2 given below.

$$\text{Average} = (\Sigma(\text{Distance Value} \times \text{Frequency Value}))/(\Sigma \times \text{Frequency Value}) \ ... \ \text{Formula 2}$$

Next, in the step S4, the depth separating unit 53 specifies the separated position where the maximum degree of class separation is calculated. The depth separating unit 53 calculates the difference (difference in distance) between the average m1 and the average m2 of the two groups separated at the specified to-be-separated position. Here, the to-be-separated position servers as the boundary of these two groups. Then, in the step S5, the depth separating unit 53 determines whether or not the calculated difference in distance exceeds a predetermined value such as 10 meters (m), which is the length of vehicle of a large-sized car.

When the calculated difference in distance does not exceed 10 m, which is the length of vehicle of one large-sized car, the multiple objects existing in the two groups separated at the specified to-be-separated position are actually an object (isolated area) that is formed as a single integrated unit, such as the bed and the driver's seat of a truck. Accordingly, the depth separating unit 53 terminates the separating processes on that isolated area, and terminates the processes in the flowchart of FIG. 8.

By contrast, when the calculated difference in distance exceeds 10 m, which is the length of vehicle of one large-sized car, the multiple objects existing in the two groups separated at the specified to-be-separated position are physically separate objects (isolated areas), such as two vehicles. Accordingly, the depth separating unit 53 advances the process to a step S6, and separates the isolated area, which is combined as one at the specified to-be-separated position, into two isolated areas. Then, the processes in the flowchart of FIG. 8 are terminated. Such separating processes become insusceptible to an adverse effect due to the disparity dispersion and an adverse effect due to the two-dimensional distribution on a U-map, and for example, two vehicles that are traveling forward in the forward/backward directions can precisely be separated from each other.

As described above, the amount of characteristics obtained by integrating the products of a frequency and a distance value (one-dimensional histogram) is calculated for each of the positions in the right and left directions, using data in which the position of an object in the horizontal direction is associated with the position of the object in the depth direction (distance value) and the frequency, and objects are separated from each other based on such characteristics. Due to the configuration as described above, objects can precisely be separated from each other.

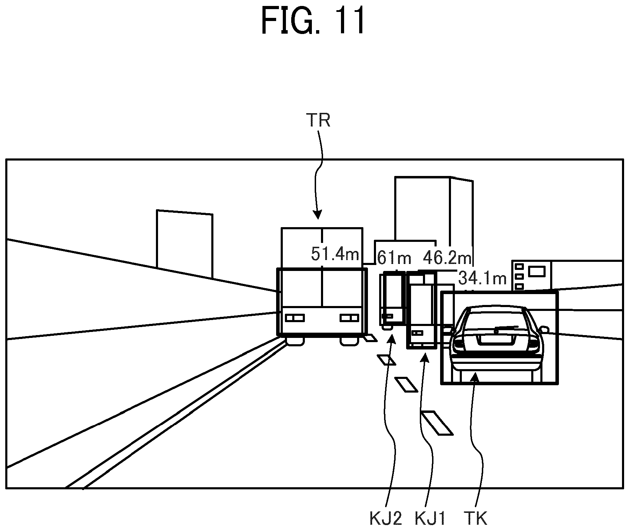

The vote correcting unit 54 illustrated in FIG. 4 that serves as an object separator resets the isolated areas (separates the isolated areas) based on the results of the separating processes performed by the depth separating unit 53 to correct the isolated areas that are set on a U-map. FIG. 11 is a diagram illustrating the reset isolated areas, according to the present embodiment. As described above with reference to FIG. 6, before the above correction, the taxi TK that is traveling forward in the right lane and the light truck KJ1 that is traveling forward at a position ahead of the taxi TK were recognized as one object and one isolated area was set thereto. However, owing to the separating processes performed as described above, as illustrated in FIG. 11, each of the taxi TK and the light truck KJ1 that is traveling forward at a position ahead of the taxi TK can be recognized as an independent object, and the isolated areas can be reset.

The object detection unit 55 as illustrated in FIG. 4 detects an object such as a vehicle, a pedestrian, a guardrail, and a traffic sign, based on the multiple isolated areas that have accurately been set to the respective objects as described above. Then, the vehicle control unit 56 supplies the vehicle ECU 3 illustrated in FIG. 2 with the vehicle control data that is the results of the object detection. The vehicle ECU 3 performs various kinds of control on the vehicle 1 such as engine-control, brake control, lane keep assist, and steering assist on the vehicle 1.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. For example, a distance value and a disparity value can be handled in an equivalent manner. Accordingly, in the embodiments of the present disclosure as described above, a disparity image is used as an example of a distance image. However, no limitation is intended thereby. For example, a disparity image that is generated using a stereo camera may be integrated with distance data that is generated using a detector such as a millimeter-wave radar and a light detection and ranging (LiDAR) device to generate a distance image. Moreover, a stereo camera and a detector such as a millimeter-wave radar and a LiDAR device may be used in combination, and the results of the object detection using a stereo camera as described above may be combined with distance data to further improve the detection accuracy.

Further, as described above, any one of the above-described and other methods of the present invention may be embodied in the form of a computer program stored on any kind of storage medium. Examples of storage media include, but are not limited to, flexible disks, hard disks, optical discs, magneto-optical discs, magnetic tape, nonvolatile memory cards, ROM, etc. Alternatively, any one of the above-described and other methods of the present invention may be implemented by ASICs, prepared by interconnecting an appropriate network of conventional component circuits, or by a combination thereof with one or more conventional general-purpose microprocessors and/or signal processors programmed accordingly.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a CPU, a RAM, and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

**Claims**

1. An information processing device (30) for separating an object based on an image captured by a stereo camera (2) that is connectable to the image processing device (30), comprising:

   a generator (51) configured to generate, based on a disparity image generated from the image captured by the stereo camera (2), a U-map which is a two-dimensional histogram indicating the frequency distribution of disparity values, in which a horizontal axis indicates an actual distance to the object and a vertical axis indicates a reduced disparity, where the degree of reduction varies according to the distance to the object;
   an isolated-area detector (52) configured to detect an isolated area that corresponds to the object existing on the U-map;
   **characterized by** a depth specification unit (53) configured to calculate the product of the frequency value and a distance value for horizontal positions on the U-map, the products indicating characteristics that correspond to a separation metric, i.e. a ratio of a between-class variance to a within-class variance in discriminant analysis, and to specify a to-be-separated position based on the characteristics when the position of the object in the depth direction is at a distance further than a prescribed position; and
   an object separator (54) configured to separate the object into a first object and a second object at the to-be-separated position.

2. The information processing device (30) according to claim 1, wherein the object is separated if the depth specification unit (53) calculates a difference between a position of the first object in the depth direction and a position of the second object in the depth direction, and the difference exceeds a length value of a vehicle.

3. The information processing device (30) according to claim 1 or 2, wherein the depth specification unit (53) specifies a plurality of candidates for the to-be-separated position, the candidates being positions in horizontal direction to separate an object, calculates an evaluation value for the degree of class separation at each candidate, and specifies the to-be-separated position where the evaluation value becomes maximum, based on the plurality of candidates for the to-be-separated position.

4. The information processing device (30) according to claim 1 or 2, wherein the depth specification unit (53) specifies a plurality of candidates for the to-be-separated position, the candidates being positions in horizontal direction to separate an object, calculates an evaluation value for the degree of class separation at each candidate, and specifies the to-be-separated position where the evaluation value becomes the second largest, based on the plurality of candidates for the to-be-separated position.

5. An imaging device (4) comprising:

   an imager (2); and
   the information processing device (30) according to any one of claims 1 to 4.

6. An equipment control system (3, 4) comprising:

   the information processing device (30) according to any one of claims 1 to 4; and
   a controller (56) to control prescribed equipment based on object data of the object separated by the object separator (54).

7. A mobile object (1) comprising the controller (56) of the equipment control system (3, 4) according to claim 6, wherein the mobile object (1) is controlled by the controller (56).

8. A computer implemented method of processing information, the method comprising:

generating, based on a disparity image generated from an image captured by a stereo camera (2), a U-map which is a two-dimensional histogram indicating the frequency distribution of disparity values, in which a horizontal axis indicates an actual distance to the object and a vertical axis indicates a reduced disparity, where the degree of reduction varies according to the distance to an object;
detecting an isolated area that corresponds to an object existing on the U-map;
calculating the product of the frequency value and a distance value for horizontal positions on the U-map, the products indicating characteristics that correspond to a separation metric, i.e. a ratio of a between-class variance to a within-class variance in discriminant analysis; and specifying a to-be-separated position based on the characteristics when the position of the object in the depth direction is at a distance further than a prescribed position; and
separating the object at the to-be-separated position.

9. A carrier means carrying computer readable code for controlling a computer to carry out the method of claim 8.

**Patentansprüche**

1. Informationsverarbeitungsvorrichtung (30) zum Separieren eines Objekts basierend auf einem Bild, das von einer Stereokamera (2) aufgenommen wurde, die an die Informationsverarbeitungsvorrichtung (30) anschließbar ist, die umfasst:

einen Generator (51), der dazu konfiguriert ist, basierend auf einem Disparitätsbild, das aus dem von der Stereokamera (2) aufgenommenen Bild erzeugt wurde, eine U-Map zu erzeugen, bei der es sich um ein zweidimensionales Histogramm handelt, das die Häufigkeitsverteilung von Disparitätswerten angibt, in der eine horizontale Achse einen tatsächlichen Abstand zum Objekt anzeigt und eine vertikale Achse eine verringerte Disparität anzeigt, wobei der Verringerungsgrad gemäß dem Abstand zum Objekt variiert;
einen Isoliertbereichsdetektor (52), der so konfiguriert ist, dass er einen isolierten Bereich erkennt, der dem auf der U-Map vorhandenen Objekt entspricht;
**gekennzeichnet durch** eine Tiefenspezifikationseinheit (53), die so konfiguriert ist, dass sie das Produkt aus dem Häufigkeitswert und einem Entfernungswert für horizontale Positionen auf der U-Map berechnet, wobei die Produkte Eigenschaften angeben, die einer Separierungsmetrik entsprechen, d. h. einem Verhältnis einer Zwischenklassen-Varianz zu einer Varianz innerhalb der Klasse in einer Diskriminanzanalyse, und eine zu separierende Position basierend auf den Eigenschaften spezifiziert, wenn die Position des Objekts in Tiefenrichtung bei einem Anstand liegt, der weiter als eine vorgegebene Position entfernt ist; und
einen Objektseparierer (54), der so konfiguriert ist, dass er das Objekt an der zu separierenden Position in ein erstes Objekt und ein zweites Objekt separiert.

2. Informationsverarbeitungsvorrichtung (30) nach Anspruch 1, wobei das Objekt separiert wird, wenn die Tiefenspezifikationseinheit (53) eine Differenz zwischen einer Position des ersten Objekts in der Tiefenrichtung und einer Position des zweiten Objekts in der Tiefenrichtung berechnet, und die Differenz einen Längenwert eines Fahrzeugs überschreitet.

3. Informationsverarbeitungsvorrichtung (30) nach Anspruch 1 oder 2, wobei die Tiefenspezifikationseinheit (53) mehrere Kandidaten für die zu separierende Position spezifiziert, wobei die Kandidaten Positionen in horizontaler Richtung zum Separieren eines Objekts sind, einen Bewertungswert für den Grad der Klassenseparierung bei jedem Kandidaten berechnet und die zu separierende Position spezifiziert, an der der Bewertungswert maximal wird, basierend auf der Vielzahl von Kandidaten für die zu separierende Position.

4. Informationsverarbeitungsvorrichtung (30) nach Anspruch 1 oder 2, wobei die Tiefenspezifikationseinheit (53) mehrere Kandidaten für die zu separierende Position spezifiziert, wobei die Kandidaten Positionen in horizontaler Richtung zum Separieren eines Objekts sind, einen Bewertungswert für den Grad der Klassenseparierung bei jedem Kandidaten berechnet und die zu separierende Position spezifiziert, an der der Bewertungswert am zweitgrößten wird, basierend auf der Vielzahl von Kandidaten für die zu separierende Position.

5. Bildgebungsvorrichtung (4), die umfasst:

   einen Bildgeber (2); und
   die Informationsverarbeitungsvorrichtung (30) nach einem der Ansprüche 1 bis 4.

6. Ausrüstungssteuerungssystem (3, 4), das umfasst:

   die Informationsverarbeitungsvorrichtung (30) nach einem der Ansprüche 1 bis 4; und
   eine Steuerung (56) zum Steuern vorgegebener Ausrüstung auf der Grundlage von Objektdaten des durch den Objektseparator (54) separierten Objekts.

7. Mobiles Objekt (1), das die Steuerung (56) des Ausrüstungssteuerungssystems (3, 4) nach Anspruch 6 umfasst, wobei das mobile Objekt (1) von der Steuerung (56) gesteuert wird.

8. Computerimplementiertes Verfahren zur Informationsverarbeitung, wobei das Verfahren Folgendes umfasst:

   Erzeugen, basierend auf einem Disparitätsbild, das aus einem von einer Stereokamera (2) aufgenommenen Bild erzeugt wurde, einer U-Map, die ein zweidimensionales Histogramm ist, das die Häufigkeitsverteilung von Disparitätswerten angibt, wobei eine horizontale Achse einen tatsächlichen Abstand zum Objekt anzeigt und eine vertikale Achse eine verringerte Disparität anzeigt, wobei der Verringerungsgrad gemäß dem Abstand zum Objekt variiert;
   Erkennen eines isolierten Bereichs, der einem auf der U-Map vorhandenen Objekt entspricht;
   Berechnen des Produkts aus dem Häufigkeitswert und einem Abstandswert für horizontale Positionen auf der U-Map, wobei die Produkte Merkmale angeben, die einer Separierungsmetrik entsprechen, d.h. einem Verhältnis einer Zwischenklassen-Varianz zu einer Varianz innerhalb der Klasse in einer Diskriminanzanalyse; und
   Spezifizieren einer zu separierenden Position basierend auf den Merkmalen, wenn die Position des Objekts in der Tiefenrichtung in einem Abstand liegt, der weiter als eine vorgegebene Position entfernt ist; und
   Separieren des Objekts an der zu separierenden Position.

9. Trägermittel, das computerlesbaren Code trägt, um einen Computer zu steuern, um das Verfahren nach Anspruch 8 auszuführen.

**Revendications**

1. Dispositif de traitement d'informations (30) pour séparer un objet sur la base d'une image capturée par une caméra stéréo (2) qui peut être connectée au dispositif de traitement d'image (30), comprenant :

   un générateur (51) configuré pour générer, sur la base d'une image de disparité générée à partir de l'image capturée par la caméra stéréo (2), une carte U qui est un histogramme bidimensionnel indiquant la distribution de fréquence des valeurs de disparité, dans lequel un axe horizontal indique une distance réelle à l'objet et un axe vertical indique une disparité réduite, où le degré de réduction varie en fonction de la distance à l'objet ;
   un détecteur de zone isolée (52) configuré pour détecter une zone isolée qui correspond à l'objet existant sur la carte U ;
   **caractérisé par** une unité de spécification de profondeur (53) configurée pour calculer le produit de la valeur de fréquence et d'une valeur de distance pour des positions horizontales sur la carte U, les produits indiquant des caractéristiques qui correspondent à une métrique de séparation, c'est-à-dire un rapport d'une variance inter-classe par rapport à une variance intra-classe dans une analyse discriminante, et pour spécifier une position à séparer sur la base des caractéristiques lorsque la position de l'objet dans la direction de la profondeur est à une distance supérieure à une position prescrite ; et
   un séparateur d'objet (54) configuré pour séparer l'objet en un premier objet et un deuxième objet à la position à séparer.

2. Dispositif de traitement d'informations (30) selon la revendication 1, dans lequel l'objet est séparé si l'unité de spécification de profondeur (53) calcule une différence entre une position du premier objet dans la direction de la profondeur et une position du deuxième objet dans la direction de la profondeur, et la différence dépasse une valeur de longueur d'un véhicule.

3. Dispositif de traitement d'informations (30) selon la revendication 1 ou 2, dans lequel l'unité de spécification de profondeur (53) spécifie une pluralité de candidats pour la position à séparer, les candidats étant des positions dans la direction horizontale pour séparer un objet, calcule une valeur d'évaluation pour le degré de séparation de classe chez chaque candidat, et spécifie la position à séparer où la valeur d'évaluation devient maximale, sur la base de la pluralité de candidats pour la position à séparer.

4. Dispositif de traitement d'informations (30) selon la revendication 1 ou 2, dans lequel l'unité de spécification de profondeur (53) spécifie une pluralité de candidats pour la position à séparer, les candidats étant des positions dans la direction horizontale pour séparer un objet, calcule une valeur d'évaluation pour le degré de séparation de classe au niveau de chaque candidat, et spécifie la position à séparer où la valeur d'évaluation devient la deuxième plus grande, sur la base de la pluralité de candidats pour la position à séparer.

5. Dispositif d'imagerie (4) comprenant :

   un imageur (2); et
   le dispositif de traitement d'informations (30) selon l'une quelconque des revendications 1 à 4.

6. Système de commande d'équipement (3, 4) comprenant :

   le dispositif de traitement d'informations (30) selon l'une quelconque des revendications 1 à 4 ; et
   un contrôleur (56) pour contrôler un équipement prescrit sur la base de données d'objet de l'objet séparé par le séparateur d'objet (54).

7. Objet mobile (1) comprenant le contrôleur (56) du système de commande d'équipement (3, 4) selon la revendication 6, dans lequel l'objet mobile (1) est contrôlé par le contrôleur (56).

8. Procédé mis en oeuvre par ordinateur pour traiter des informations, le procédé comprenant :

   la génération, sur la base d'une image de disparité générée à partir d'une image capturée par une caméra stéréo (2), d'une carte U qui est un histogramme bidimensionnel indiquant la distribution de fréquence des valeurs de disparité, dans lequel un axe horizontal indique une distance réelle à l'objet et un axe vertical indiquent une disparité réduite, où le degré de réduction varie en fonction de la distance à un objet ;
   la détection d'une zone isolée qui correspond à un objet existant sur la carte U ;
   le calcul du produit de la valeur de fréquence et d'une valeur de distance pour des positions horizontales sur la carte U, les produits indiquant des caractéristiques qui correspondent à une métrique de séparation, c'est-à-dire un rapport d'une variance inter-classe par rapport à une variance intra-classe dans une analyse discriminante ; et
   la spécification d'une position à séparer sur la base des caractéristiques lorsque la position de l'objet dans la direction de la profondeur est à une distance supérieure à une position prescrite ; et
   la séparation de l'objet à la position à séparer.

9. Moyen de support portant un code lisible par ordinateur pour commander un ordinateur afin de mettre en oeuvre le procédé selon la revendication 8.

EP 3 324 336 B1

# FIG. 1

LEFT FIELD OF VISION

RIGHT FIELD OF VISION

1

2

DIRECTION OF TRAVEL
OF VEHICLE

# FIG. 2

| STEREO CAMERA | → | VEHICLE ECU |

2

3

14

# FIG. 3

VEHICLE CONTROL DATA          CAN DATA

# FIG. 4

VOTE PROCESSING UNIT 51 — ISOLATED-AREA DETECTOR 52 — DEPTH SEPARATING UNIT 53 — VOTE CORRECTING UNIT 54 — OBJECT DETECTION UNIT 55 — VEHICLE CONTROL UNIT 56

# FIG. 5

# FIG. 6

# FIG. 7

# FIG. 8

START

S1

ADD UP AMOUNTS OF CHARACTERISTICS OF
"Y COORDINATE VALUE × VALUE OF FREQUENCY"
IN VOTE INFORMATION TO GENERATE
ONE-DIMENSIONAL HISTOGRAM

S2

IS ADDED-UP
WIDTH GREATER
THAN PREDETERMINED
WIDTH?

NO

YES

S3

CALCULATE DEGREE OF CLASS SEPARATION

S4

SPECIFY SEPARATED POSITION WHERE MAXIMUM
DEGREE OF CLASS SEPARATION IS CALCULATED

S5

DOES AVERAGE
DIFFERENCE IN DISTANCE OF
SEPARATED CLASSES EXCEED
PREDETERMINED
VALUE?

NO

YES

S6

SEPARATE

END

# FIG. 9

ONE-DIMENSIONAL
HISTOGRAM

# FIG. 10

ONE-DIMENSIONAL
HISTOGRAM

w2: SUM OF VALUES
OF FREQUENCY
m2: AVERAGE

w1: SUM OF VALUES
OF FREQUENCY
m1: AVERAGE

# FIG. 11

TR

51.4m  61m  46.2m

34.1m

KJ2  KJ1  TK

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014096005 A

- WO 2012017650 A1